# EUROPÄISCHE PATENTSCHRIFT

(11) **EP 4 500 424 B1**
(45) Veröffentlichungstag und Bekanntmachung des Hinweises auf die Patenterteilung: **18.02.2026**
(21) Anmeldenummer: 23738629.7
(22) Anmeldetag: 21.06.2023
(51) Int. Cl.: G06Q 10/0631, G06Q 50/04

(54) **OPTIMIERUNG EINER PRODUKTIONSPLANUNG**
OPTIMIZATION OF A PRODUCTION PLANNING
OPTIMISATION D'UN PLANNING DE PRODUCTION

(30) Priorität: 21.06.2022 EP 22180141
(43) Veröffentlichungstag der Anmeldung: 05.02.2025
(73) Patentinhaber: Siemens Aktiengesellschaft, 80333 München (DE)
(72) Erfinder: FISCHER, Jan, 81541 München (DE); KLEIN, Wolfram, 85579 Neubiberg (DE); LISTL, Franz Georg, 93186 Pettendorf (DE); OBST, Birgit, 80935 München (DE); ROSEN, Roland, 82229 Seefeld (DE); SOHR, Annelie, 81929 München (DE); WEHRSTEDT, Jan Christoph, 81829 München (DE); WEINERT, Nils, 80798 München (DE)
(74) Vertreter: Siemens Patent Attorneys
(86) Internationale Anmeldenummer: PCT/EP2023/066806
(87) Internationale Veröffentlichungsnummer: WO 2023/247631

(56) Entgegenhaltungen:
- EP-A1- 3 188 096
- US-A1- 2015 106 145
- US-A1- 2020 175 456

## Beschreibung

Die Erfindung betrifft eine Vorrichtung und ein computerimplementiertes Verfahren zur Optimierung einer Produktionsplanung für eine Produktion mindestens eines Produkts, wobei Mitarbeiter zum Bedienen von Maschinen zur Produktion des mindestens einen Produkts zugeordnet sind, sowie ein Computerprogrammprodukt.

Bei einer industriellen Produktion wird in der Regel vorab das Personal auf verschiedene Maschinen, z.B. zum Bedienen oder Überwachen, verteilt. Außerdem wird festgelegt, welche Produktionsschritte in einem vorgegebenen Zeitraum auf einer jeweiligen Maschine gefertigt werden. Diese Produktionsplanung wird in der Regel a priori oder offline durchgeführt. Dabei erfolgt für den Betrachtungszeitraum eine stationäre Zuordnung der Mitarbeiter auf Maschinen bzw. Arbeitsbereiche. Oftmals sind eine solche Planung und Zuteilung nicht effizient, was beispielsweise einen Produktionsfluss verschlechtern kann.

US 2020/175456 A1 offenbart eine Mitarbeiter- und Ressourcen-Zuordnung in einer Fabrikumgebung mittels eines Optimierungsmodells.

Es ist daher eine Aufgabe der Erfindung, eine Produktionsplanung für eine Produktion eines Produkts oder mehrerer Produkte zu optimieren.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zur Optimierung einer Produktionsplanung für eine Produktion mindestens eines Produkts, wobei Mitarbeiter zum Bedienen von Maschinen zur Produktion des mindestens einen Produkts zugeordnet sind,
wobei die Vorrichtung umfasst:
a) eine Schnittstelle, die derart eingerichtet ist, Planungsdaten für die Produktion sowie Kompetenzinformationen bezüglich Maschinenbedienung und Verfügbarkeitsinformationen der Mitarbeiter einzulesen,
b) ein erstes Optimierungsmodul, das derart eingerichtet ist, eine optimierte prozentuale Zuordnung der Mitarbeiter zu den jeweiligen Maschinen für einen vorgegebenen Zeitraum in Abhängigkeit der Planungsdaten, der Kompetenzinformationen und der Verfügbarkeitsinformationen zu ermitteln,
c) ein zweites Optimierungsmodul, das derart eingerichtet ist, optimierte Produktionsplanungsdaten zu ermitteln, wobei eine optimierte zeitliche Abfolge jeweiliger Produktionsschritte gemäß der Planungsdaten auf die Mitarbeiter und Maschinen in Abhängigkeit der prozentualen Zuordnung und in Abhängigkeit einer Anzahl von für einen Produktionsschritt benötigten Mitarbeiter ermittelt wird,und bei einer zeitlichen Abweichung der Produktion von den optimierten Produktionsplanungsdaten, abhängig von der optimierten prozentualen Zuordnung erneut optimierte Produktionsplanungsdaten zu ermitteln und
d) ein Ausgabemodul, das derart eingerichtet ist, die optimierten Produktionsplanungsdaten zur Produktion des mindestens einen Produkts gemäß der optimierten Produktionsplanungsdaten auszugeben.

Die Vorrichtung ist insbesondere geeignet die Produktionsplanung für eine Produktion einer großen Stückzahl eines Produkts zu optimieren, wobei das Produkt beispielsweise aus mehreren Komponenten besteht. Die Produktion der einzelnen Komponenten erfolgt beispielsweise in vorgegebenen Produktionsschritten jeweils auf verschiedenen Maschinen, die jeweils von einem Mitarbeiter bedient oder überwacht werden.

Planungsdaten für die Produktion können beispielsweise auf Basis von Kapazitäten der vorhandenen bzw. benötigten Maschinen angeben, welches Volumen in einem vorgegebenen Zeitraum produziert werden kann. Die Planungsdaten umfassen somit vorzugsweise eine Kapazitätsbetrachtung.

Kompetenzinformationen bezüglich Maschinenbedienung der Mitarbeiter betreffen beispielsweise Ausbildung bzw. berufliche Qualifikation der Mitarbeiter, die für die Bedienung einer Maschine relevant sind. Insbesondere kann eine Kompetenzinformation eines Mitarbeiters ein Qualifikationsprofil umfassen. Verfügbarkeitsinformationen der Mitarbeiter umfassen Informationen zu Arbeitsschichten und individuellen Arbeitszeiten. Die Verfügbarkeitsinformationen werden vorzugsweise auf Schichtebene bereitgestellt.

Die Planungsdaten, die Kompetenzinformationen und die Verfügbarkeitsinformationen können insbesondere als ein Datensatz oder als einzelne Datensätze eingelesen und für die weitere Produktionsoptimierung bereitgestellt werden.

Es ist ein Vorteil der Erfindung, dass keine feste Zuordnung von Mitarbeitern auf Arbeitsplätze bzw. Maschinen, sondern eine gleichzeitige Zuordnung der Mitarbeiter und der Produktionsvorgänge erfolgt. Dazu wird die Produktionsfeinplanung mittels zwei Optimierungsschritten optimiert. Dies führt zur Verbesserung des Produktionsflusses, reduziert zusätzlich die Komplexität und erlaubt eine adaptive Neuberechnung der Produktionsplanungsdaten.

In einer Ausführungsform der Vorrichtung kann das erste Optimierungsmodul die optimierte Zuordnung der Mitarbeiter zu den jeweiligen Maschinen mittels eines gemischt ganzzahligen Optimierungsproblems ermitteln.

Insbesondere wird ein MILP- oder ein MINLP-Optimierungsproblem mit dem Ziel einer maximalen Abarbeitung für einen vorgegebenen Betrachtungszeitraum aufgestellt. Insbesondere kann zunächst ein einfacher Abgleich eines Qualifikationsprofils eines Mitarbeiters mit Maschinenanforderungen erfolgen.

In einer weiteren Ausführungsform der Vorrichtung kann das erste Optimierungsmodul eingerichtet sein, die optimierte Zuordnung der Mitarbeiter zu den jeweiligen Maschinen unter Berücksichtigung mindestens einer der folgenden Randbedingungen zu ermitteln:
- Minimierung eines Arbeitsplatzwechsels eines Mitarbeiters,
- gleichmäßige Auslastung eines Mitarbeiters,
   und/oder
- Einhaltung maschinenspezifischer Kriterien, wie z.B. Vermeidung von Kaltstarts.

In einer weiteren Ausführungsform der Vorrichtung kann das zweite Optimierungsmodul eingerichtet sein, die optimierten Produktionsplanungsdaten unter Berücksichtigung mindestens einer der folgenden Randbedingungen zu ermitteln:
- Einhaltung einer vorgegebenen Reihenfolge der Produktionsschritte,
- Berücksichtigung des Bill-of-Material und/oder Bill-of-Process,
- Einhaltung eines Fertigstellungstermins,
- einer vorgegebenen Kapazität einer Maschine,
   und/oder
- Minimierung von Umrüstzeiten.

Somit kann das zweite Optimierungsproblem erneut gelöst und es können aktualisierte Produktionsplanungsdaten ermittelt werden.

In einer weiteren Ausführungsform der Vorrichtung können das erste Optimierungsmodul und/oder das zweite Optimierungsmodul derart eingerichtet sein, ausgehend von einem aktuellen Produktionszustand die jeweilige Optimierung erneut auszuführen.

Insbesondere kann dies für noch ausstehenden Produktionsschritte durchgeführt werden.

In einer weiteren Ausführungsform kann die Vorrichtung zusätzlich ein Simulationsmodul umfassen, wobei das Simulationsmodul eingerichtet ist, eine computergestützte Materialflusssimulation der Produktion in Abhängigkeit der optimierten Produktionsplanungsdaten durchzuführen und Simulationsdaten auszugeben.

In einer weiteren Ausführungsform der Vorrichtung kann das Simulationsmodul eingerichtet sein, Transportzeiten zwischen Maschinen zu berücksichtigen.

In einer weiteren Ausführungsform kann die Vorrichtung ein Validierungsmodul umfassen, das derart eingerichtet ist, die optimierten Produktionsplanungsdaten anhand der Simulationsdaten zu validieren.

Die Optimierung erfolgt somit getrennt von einer Materialflusssimulation. Die Simulation erlaubt beispielsweise eine Überprüfung der Produktionsplanungsdaten. Außerdem erlaubt die Simulation eine Feinjustierung der Produktionsplanungsdaten, da insbesondere auch Transportzeiten berücksichtigt werden können.

In einer weiteren Ausführungsform kann die Vorrichtung zusätzlich ein Prognosemodul umfassen, das derart eingerichtet ist, produktionsrelevante Daten anhand der Simulationsdaten zu prognostizieren.

Beispielsweise kann mittels der Simulation ein Material- oder Energieverbrauch berechnet werden.

Gemäß einem zweiten Aspekt betrifft die Erfindung ein computerimplementiertes Verfahren zur Optimierung einer Produktionsplanung für eine Produktion mindestens eines Produkts, wobei Mitarbeiter zum Bedienen von Maschinen zur Produktion des mindestens einen Produkts zugeordnet sind, umfassend die Verfahrensschritte:
- Einlesen von Planungsdaten für die Produktion, von Kompetenzinformationen bezüglich Maschinenbedienung und Verfügbarkeitsinformationen der Mitarbeiter,
- Ermitteln einer optimierten prozentualen Zuordnung der Mitarbeiter zu den jeweiligen Maschinen für einen vorgegebenen Zeitraum in Abhängigkeit der Planungsdaten, der Kompetenzinformationen und der Verfügbarkeitsinformationen,
- Ermitteln von optimierten Produktionsplanungsdaten, wobei eine optimierte zeitliche Abfolge jeweiliger Produktionsschritte gemäß der Planungsdaten auf die Mitarbeiter und Maschinen in Abhängigkeit der prozentualen Zuordnung und in Abhängigkeit einer Anzahl von für einen Produktionsschritt benötigten Mitarbeiter ermittelt wird, wobei bei einer zeitlichen Abweichung der Produktion von den optimierten Produktionsplanungsdaten, abhängig von der optimierten prozentualen Zuordnung erneut optimierte Produktionsplanungsdaten ermittelt werden, und
- Ausgeben der optimierten Produktionsplanungsdaten zur Produktion des mindestens einen Produkts gemäß der optimierten Produktionsplanungsdaten.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein Ausführungsbeispiel einer erfindungsgemäßen Vorrichtung zur Optimierung einer Produktionsplanung; und
- Fig. 2:: ein Ausführungsbeispiel eines erfindungsgemäßen Verfahrens zur Optimierung einer Produktionsplanung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

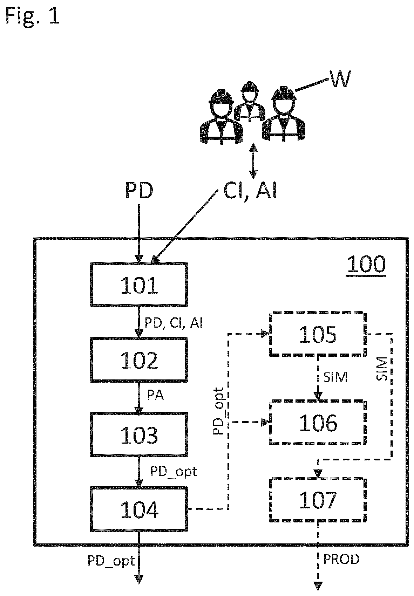

Figur 1 zeigt eine Vorrichtung 100 zur Optimierung einer Produktionsplanung für eine Produktion mindestens eines Produkts, wobei Mitarbeiter W zum Bedienen von Maschinen zur Produktion des mindestens einen Produkts zugeordnet sind. Jeweilige Maschinen sind beispielsweise eingerichtet, mindestens einen Teil des Produkts zu produzieren. Das Produkt kann beispielsweise aus einer Vielzahl von Produktkomponenten bestehen, die in einzelnen Produktionsschritten produziert, bearbeitet und/oder zusammengefügt werden. Dabei können einzelne Produktionsschritte auf jeweiligen Maschinen durchgeführt werden. Beispielsweise kann eine große Stückzahl des Produkts produziert werden. Für die Produktion werden beispielsweise verschiedene Maschinen benötigt, die jeweils von Mitarbeitern bedient werden. Dabei kann ein Mitarbeiter auch mehrere Maschinen bedienen. Mit der Vorrichtung kann eine optimierte Produktionsplanung bereitgestellt werden, die einzelne Produktionsschritte und Mitarbeiter auf Maschinen optimiert zuordnet, um eine effiziente Produktion zu erzielen.

Die Vorrichtung 100 umfasst eine Schnittstelle 101, ein erstes Optimierungsmodul 102, ein zweites Optimierungsmodul 103 und ein Ausgabemodul 104. Die Vorrichtung 100 kann optional noch ein Simulationsmodul 105, ein Validierungsmodul 106 und/oder ein Prognosemodul 107 umfassen. Des Weiteren kann die Vorrichtung 100 mindestens einen Prozessor umfassen. Die Vorrichtung 100 kann insbesondere Software- und Hardwarekomponenten umfassen; beispielsweise können Module der Vorrichtung als Softwarekomponenten ausgestaltet sein. Es kann sich beispielsweise um ein Assistenzsystem handeln.

Die Schnittstelle 101 ist derart eingerichtet, Planungsdaten PD für die Produktion einzulesen. Die Planungsdaten PD geben beispielsweise an, welche Stückzahl des Produkts in einem vorgegebenen Zeitraum mit vorgegebenen Maschinen produziert werden soll. Die Planungsdaten können aus Online-Systemen (SAP, MES) importiert werden. Weiter werden Kompetenzinformationen CI bezüglich Maschinenbedienung und Verfügbarkeitsinformationen AI der Mitarbeiter über die Schnittstelle 101 eingelesen. Vorzugsweise liegen für jeden Mitarbeiter eine Kompetenzinformation und eine Verfügbarkeitsinformation vor. Die Planungsdaten PD, die Kompetenzinformationen CI und die Verfügbarkeitsinformationen AI werden an das erste Optimierungsmodul 102 übermittelt.

Das erste Optimierungsmodul 102 ist derart eingerichtet, eine optimierte prozentuale Zuordnung PA der Mitarbeiter W zu den jeweiligen Maschinen für einen vorgegebenen Zeitraum in Abhängigkeit der Planungsdaten PD, der Kompetenzinformationen CI und der Verfügbarkeitsinformationen zu ermitteln. Dies wird vorzugsweise mittels eines gemischt ganzzahligen Optimierungsproblems gelöst. Das Optimierungsmodul 102 berücksichtigt dabei vorzugsweise folgende Randbedingungen bei der Optimierung:
- Minimierung eines Arbeitsplatzwechsels eines Mitarbeiters,
- gleichmäßige Auslastung eines bzw. aller Mitarbeiter,
   und/oder
- Einhaltung maschinenspezifischer Kriterien, wie z.B. Verhinderung von Kaltstarts oder Stillstandzeiten.

Die optimierte prozentuale Zuordnung PA der Mitarbeiter zu den jeweiligen Maschinen wird dem zweiten Optimierungsmodul 103 als Eingabe übermittelt.

Das zweite Optimierungsmodul 103 ist derart eingerichtet, optimierte Produktionsplanungsdaten PD_opt zu ermitteln. Dabei wird eine optimierte zeitliche Abfolge jeweiliger Produktionsschritte gemäß der Planungsdaten PD auf die Mitarbeiter W und Maschinen in Abhängigkeit der prozentualen Zuordnung PA und in Abhängigkeit einer Anzahl von für einen Produktionsschritt benötigten Mitarbeiter W berechnet. Folglich wird eine zeitliche Zuordnung bzw. Reihenfolgebildung (Scheduling) bestimmt. Ziel ist eine Zeitoptimierung.

Das zweite Optimierungsmodul 103 berücksichtigt vorzugsweise folgende Randbedingungen:
- Einhaltung einer vorgegebenen Reihenfolge der Produktionsschritte,
- Berücksichtigung des Bill-of-Material und/oder Bill-of-Process,
- Einhaltung eines Fertigstellungstermins,
- einer vorgegebenen Kapazität einer Maschine,
   und/oder
- Minimierung von Umrüstzeiten.

Die optimierten Produktionsplanungsdaten PD_opt können anschließend ausgegeben werden, um die Produktion des mindestens einen Produkts gemäß der optimierten Produktionsplanungsdaten durchzuführen.

Bei einer Abweichung der Produktion von den optimierten Produktionsplanungsdaten kann das zweite Optimierungsmodul 103 in Abhängigkeit der optimierten prozentualen Zuordnung PA erneute optimierte Produktionsplanungsdaten ermitteln.

Außerdem können das erste Optimierungsmodul 102 und/oder das zweite Optimierungsmodul 103 ausgehend von einem aktuellen Produktionszustand für die noch offenen Produktionsschritte die jeweilige Optimierung erneut ausführen.

Die optimierten Produktionsplanungsdaten PD_opt können auch dem Simulationsmodul 105 und dem Validierungsmodul 106 übergeben werden.

Das Simulationsmodul 105 ist derart eingerichtet, in Abhängigkeit der optimierten Produktionsplanungsdaten PA eine computergestützte Materialflusssimulation der Produktion durchzuführen. Dabei können insbesondere Transportzeiten zwischen Maschinen berücksichtigt werden. Das Simulationsmodul 105 stellt entsprechende Simulationsdaten SIM bereit.

Die Simulationsdaten SIM können dem Validierungsmodul 106 übermittelt werden. Das Validierungsmodul 106 ist derart eingerichtet, die optimierten Produktionsplanungsdaten PD_opt anhand der Simulationsdaten SIM zu validieren. Damit kann die Planung auch weiter verfeinert werden.

Außerdem können die Simulationsdaten SIM dem Prognosemodul 107 übermittelt werden. Das Prognosemodul 107 ist derart eingerichtet, produktionsrelevante Daten PROD anhand der Simulationsdaten SIM zu prognostizieren. Beispielsweise können Maschinenlaufzeiten, Materialverbrauch oder Energieverbrauch anhand der Simulationsdaten ermittelt werden.

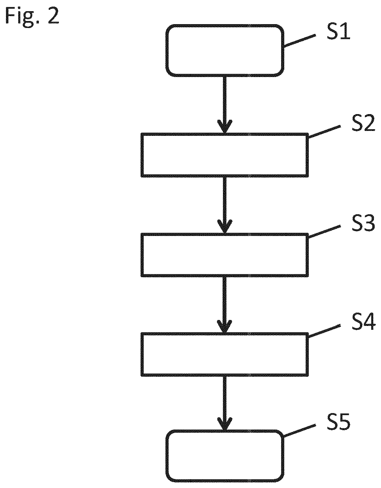

Figur 2 zeigt ein Ausführungsbeispiel eines computerimplementierten Verfahrens zur Optimierung einer Produktionsplanung für eine Produktion mindestens eines Produkts, wobei Mitarbeiter zum Bedienen von Maschinen zur Produktion des mindestens einen Produkts zugeordnet sind. Insbesondere kann das Verfahren durch eine Vorrichtung, wie beispielhaft anhand Figur 1 beschrieben, durchgeführt werden.

Das Verfahren umfasst folgende Verfahrensschritte:
Im ersten Schritt S1 werden Planungsdaten für die Produktion, Kompetenzinformationen bezüglich Maschinenbedienung und Verfügbarkeitsinformationen der Mitarbeiter eingelesen.

Im nächsten Schritt S2 wird eine optimierte prozentuale Zuordnung der Mitarbeiter zu den jeweiligen Maschinen für einen vorgegebenen Zeitraum in Abhängigkeit der Planungsdaten, der Kompetenzinformationen und der Verfügbarkeitsinformationen ermittelt.

Im nächsten Schritt S3 werden optimierte Produktionsplanungsdaten ermittelt, wobei eine optimierte zeitliche Abfolge jeweiliger Produktionsschritte gemäß der Planungsdaten auf die Mitarbeiter und Maschinen in Abhängigkeit der prozentualen Zuordnung und in Abhängigkeit einer Anzahl von für einen Produktionsschritt benötigten Mitarbeiter ermittelt wird.

Im nächsten Schritt S4 werden die optimierten Produktionsplanungsdaten ausgegeben. Beispielsweise können die optimierten Produktionsplanungsdaten den jeweiligen Mitarbeitern zur Verfügung gestellt werden. Beispielsweise können die optimierten Produktionsplanungsdaten einem jeweiligen Mitarbeiter individuell bereitgestellt werden. Die Bereitstellung kann beispielsweise auf Smart Devices erfolgen. Es ist auch möglich, dass eine Übersicht der optimierten Produktionsplanungsdaten für einen Schichtleiter bereitgestellt wrden.

Anschließend, S5, kann das Produkt gemäß der optimierten Produktionsplanungsdaten produziert werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zur Optimierung einer Produktionsplanung für eine Produktion mindestens eines Produkts, wobei Mitarbeiter (W) zum Bedienen von Maschinen zur Produktion des mindestens einen Produkts zugeordnet sind,
wobei die Vorrichtung umfasst:
a) eine Schnittstelle (101), die derart eingerichtet ist, Planungsdaten (PD) für die Produktion sowie Kompetenzinformationen (CI) bezüglich Maschinenbedienung und Verfügbarkeitsinformationen (AI) der Mitarbeiter (W) einzulesen,
b) ein erstes Optimierungsmodul (102), das derart eingerichtet ist, eine optimierte prozentuale Zuordnung (PA) der Mitarbeiter zu den jeweiligen Maschinen für einen vorgegebenen Zeitraum in Abhängigkeit der Planungsdaten, der Kompetenzinformationen und der Verfügbarkeitsinformationen zu ermitteln,
c) ein zweites Optimierungsmodul (103), das derart eingerichtet ist, optimierte Produktionsplanungsdaten (PD_opt) zu ermitteln, wobei eine optimierte zeitliche Abfolge jeweiliger Produktionsschritte gemäß der Planungsdaten (PD) auf die Mitarbeiter (W) und Maschinen in Abhängigkeit der prozentualen Zuordnung (PA) und in Abhängigkeit einer Anzahl von für einen Produktionsschritt benötigten Mitarbeiter ermittelt wird, und bei einer zeitlichen Abweichung der Produktion von den optimierten Produktionsplanungsdaten, abhängig von der optimierten prozentualen Zuordnung erneut optimierte Produktionsplanungsdaten zu ermitteln
und
d) ein Ausgabemodul (104), das derart eingerichtet ist, die optimierten Produktionsplanungsdaten (PD_opt) zur Produktion des mindestens einen Produkts gemäß der optimierten Produktionsplanungsdaten auszugeben.

2. Vorrichtung nach Anspruch 1, wobei das erste Optimierungsmodul (102) die optimierte Zuordnung der Mitarbeiter zu den jeweiligen Maschinen mittels eines gemischt ganzzahligen Optimierungsproblems ermittelt.

3. Vorrichtung nach Anspruch 1 oder 2, wobei das erste Optimierungsmodul (102) eingerichtet ist, die optimierte Zuordnung der Mitarbeiter zu den jeweiligen Maschinen unter Berücksichtigung mindestens einer der folgenden Randbedingungen zu ermitteln:
- Minimierung eines Arbeitsplatzwechsels eines Mitarbeiters,
- gleichmäßige Auslastung eines Mitarbeiters,
und/oder
- Einhaltung maschinenspezifischer Kriterien.

4. Vorrichtung nach einem der vorhergehenden Ansprüche, wobei das zweite Optimierungsmodul (103) eingerichtet ist, die optimierten Produktionsplanungsdaten unter Berücksichtigung mindestens einer der folgenden Randbedingungen zu ermitteln:
- Einhaltung einer vorgegebenen Reihenfolge der Produktionsschritte,
- Berücksichtigung des Bill-of-Material und/oder Bill-of-Process,
- Einhaltung eines Fertigstellungstermins,
- einer vorgegebenen Kapazität einer Maschine,
und/oder
- Minimierung von Umrüstzeiten.

5. Vorrichtung nach einem der vorhergehenden Ansprüche, wobei das erste Optimierungsmodul (102) und/oder das zweite Optimierungsmodul (103) derart eingerichtet sind, ausgehend von einem aktuellen Produktionszustand die jeweilige Optimierung erneut auszuführen.

6. Vorrichtung nach einem der vorhergehenden Ansprüche, die zusätzlich ein Simulationsmodul (105) umfasst, wobei das Simulationsmodul eingerichtet ist, eine computergestützte Materialflusssimulation der Produktion in Abhängigkeit der optimierten Produktionsplanungsdaten durchzuführen und Simulationsdaten (SIM) auszugeben.

7. Vorrichtung nach Anspruch 6, wobei das Simulationsmodul (105) eingerichtet ist, Transportzeiten zwischen Maschinen zu berücksichtigen.

8. Vorrichtung nach Anspruch 6 oder 7, die zusätzlich ein Validierungsmodul (106) umfasst, das derart eingerichtet ist, die optimierten Produktionsplanungsdaten anhand der Simulationsdaten (SIM) zu validieren.

9. Vorrichtung nach einem der Ansprüche 6 oder 7, die zusätzlich ein Prognosemodul (107) umfasst, das derart eingerichtet ist, produktionsrelevante Daten (PROD) anhand der Simulationsdaten (SIM) zu prognostizieren.

10. Computerimplementiertes Verfahren zur Optimierung einer Produktionsplanung für eine Produktion mindestens eines Produkts, wobei Mitarbeiter zum Bedienen von Maschinen zur Produktion des mindestens einen Produkts zugeordnet sind, umfassend die Verfahrensschritte:
- Einlesen (S1) von Planungsdaten für die Produktion, von Kompetenzinformationen bezüglich Maschinenbedienung und Verfügbarkeitsinformationen der Mitarbeiter,
- Ermitteln (S2) einer optimierten prozentualen Zuordnung der Mitarbeiter zu den jeweiligen Maschinen für einen vorgegebenen Zeitraum in Abhängigkeit der Planungsdaten, der Kompetenzinformationen und der Verfügbarkeitsinformationen,
- Ermitteln (S3) von optimierten Produktionsplanungsdaten, wobei eine optimierte zeitliche Abfolge jeweiliger Produktionsschritte gemäß der Planungsdaten auf die Mitarbeiter und Maschinen in Abhängigkeit der prozentualen Zuordnung und in Abhängigkeit einer Anzahl von für einen Produktionsschritt benötigten Mitarbeiter ermittelt wird, wobei bei einer zeitlichen Abweichung der Produktion von den optimierten Produktionsplanungsdaten, abhängig von der optimierten prozentualen Zuordnung erneut optimierte Produktionsplanungsdaten ermittelt werden,
und
- Ausgeben (S4) der optimierten Produktionsplanungsdaten zur Produktion des mindestens einen Produkts gemäß der optimierten Produktionsplanungsdaten.

11. Computerprogrammprodukt, das direkt in einen programmierbaren Computer ladbar ist, umfassend Programmcodeteile, die dazu geeignet sind, die Verfahrensschritte nach Anspruch 10 durchzuführen.

## Claims

1. Apparatus (100) for optimizing production planning for production of at least one product, wherein workers (W) are assigned to operate machines for producing the at least one product,
wherein the apparatus comprises:
a) an interface (101) which is configured to import planning data (PD) for the production, and also competency information (CI) regarding machine operation and availability information (AI) on the workers (W),
b) a first optimization module (102) which is configured to determine an optimized percentage assignment (PA) of the workers to the respective machines for a defined time period according to the planning data, the competency information and the availability information,
c) a second optimization module (103) which is configured to determine optimized production planning data (PD_opt), wherein an optimized time sequence of respective production steps is determined in accordance with the planning data (PD) with respect to the workers (W) and machines according to the percentage assignment (PA) and according to the number of workers needed for a production step, and, in the event that the production deviates in time from the optimized production planning data, to determine re-optimized production planning data according to the optimized percentage assignment
and
d) an output module (104) which is configured to output the optimized production planning data (PD_opt) for producing the at least one product in accordance with the optimized production planning data.

2. Apparatus according to Claim 1, wherein the first optimization module (102) determines the optimized assignment of the workers to the respective machines by means of a mixed integer optimization problem.

3. Apparatus according to Claim 1 or 2, wherein the first optimization module (102) is configured to determine the optimized assignment of the workers to the respective machines taking into account at least one of the following boundary conditions:
- minimizing a change in workstation by a worker,
- even utilization of a worker
and/or
- compliance with machine-specific criteria.

4. Apparatus according to one of the preceding claims, wherein the second optimization module (103) is configured to determine the optimized production planning data taking into account at least one of the following boundary conditions:
- compliance with a defined sequence of the production steps,
- taking into account the bill of materials and/or bill of process,
- compliance with a completion date,
- a defined capacity of a machine,
and/or
- minimizing retooling times.

5. Apparatus according to one of the preceding claims, wherein the first optimization module (102) and/or the second optimization module (103) is/are configured to re-execute the associated optimization on the basis of a current production status.

6. Apparatus according to one of the preceding claims, which additionally comprises a simulation module (105), wherein the simulation module is configured to perform a computer-aided material-flow simulation of the production according to the optimized production planning data, and to output simulation data (SIM).

7. Apparatus according to Claim 6, wherein the simulation module (105) is configured to take into account transport times between machines.

8. Apparatus according to Claim 6 or 7, which additionally comprises a validation module (106) which is configured to validate the optimized production planning data on the basis of the simulation data (SIM).

9. Apparatus according to either of Claims 6 and 7, which additionally comprises a prediction module (107) which is configured to predict production-relevant data (PROD) on the basis of the simulation data (SIM).

10. Computer-implemented method for optimizing production planning for production of at least one product, wherein workers are assigned to operate machines for producing the at least one product,
comprising the method steps of:
- importing (S1) planning data for the production, competency information regarding machine operation and availability information on the workers,
- determining (S2) an optimized percentage assignment of the workers to the respective machines for a defined time period according to the planning data, the competency information and the availability information,
- determining (S3) optimized production planning data, wherein an optimized time sequence of respective production steps is determined in accordance with the planning data with respect to the workers and machines according to the percentage assignment and according to the number of workers needed for a production step, wherein, in the event that the production deviates in time from the optimized production planning data, re-optimized production planning data are determined according to the optimized percentage assignment,
and
- outputting (S4) the optimized production planning data for producing the at least one product in accordance with the optimized production planning data.

11. Computer program product which can be loaded directly into a programmable computer, comprising program code parts that are suitable for carrying out the method steps according to Claim 10.

## Revendications

1. Installation (100) d'optimisation d'un planning de production pour la production d'au moins un produit, dans laquelle des collaborateurs (W) sont affectés au service des machines de production du au moins un produit,
dans laquelle l'installation comprend :
a) une interface (101), qui est agencée pour lire des données (PD) de planning pour la production ainsi que des informations (CI) de compétence en ce qui concerne le service des machines et des informations (AI) de disponibilité des collaborateurs (W),
b) un premier module (102) d'optimisation, qui est agencé pour déterminer une affectation (PA) en pourcentage optimisée des collaborateurs aux machines respectives pendant un laps de temps donné à l'avance, en fonction des données de planning, des informations de compétence et des informations de disponibilité,
c) un deuxième module (103) d'optimisation, qui est agencé pour déterminer des données (PD_opt) optimisées de planning de production, dans lequel on détermine une séquence temporelle optimisée de stades respectifs de production conformément aux données (PD) de planning sur les collaborateurs (W) et les machines, en fonction de l'affectation (PA) en pourcentage et en fonction du nombre de collaborateurs nécessaires pour un stade de production, et s'il se produit un écart temporel de la production aux données optimisées du planning de production, pour déterminer des données optimisées à nouveau de planning de production en fonction de l'affectation optimisée en pourcentage,
et
d) un module (104) de sortie, qui est agencé pour donner les données (PD_opt) optimisées de planning de production, pour la production du au moins un produit suivant les données optimisées de planning de production.

2. Installation suivant la revendication 1, dans laquelle le premier module (102) d'optimisation détermine l'affectation optimisée des collaborateurs aux machines respectives au moyen d'un problème d'optimisation en nombres entiers mélangés.

3. Installation suivant la revendication 1 ou 2, dans laquelle le premier module (102) d'optimisation est agencé pour déterminer l'affectation optimisée des collaborateurs aux machines respectives, en tenant compte au moins de l'une des conditions aux limites suivantes :
- minimisation d'un changement d'emplacement de travail d'un collaborateur,
- régulation de la charge de travail d'un collaborateur, et/ou
- respect de critères spécifiques aux machines.

4. Installation suivant l'une des revendications précédentes, dans laquelle le deuxième module (103) d'optimisation est agencé pour déterminer les données optimisées de planning de production, en tenant compte au moins de l'une des conditions aux limites suivantes :
- respect d'une séquence donnée à l'avance des stades de production,
- prise en compte du bill of material ou du bill of process,
- respect d'un délai de mise à disposition,
- une capacité donnée à l'avance d'une machine, et/ou
- minimisation de temps de rééquipement.

5. Installation suivant l'une des revendications précédentes, dans laquelle le premier module (102) d'optimisation et/ou le deuxième module (103) d'optimisation sont agencés de manière à exécuter à nouveau l'optimisation respective, à partir d'un état de production en cours.

6. Installation suivant l'une des revendications précédentes, qui comprend supplémentairement un module (105) de simulation, dans laquelle le module de simulation est agencé pour effectuer une simulation assistée par ordinateur de flux de matériau de la production en fonction des données optimisées du planning de production et pour donner des données (SIM) de simulation.

7. Installation suivant la revendication 6, dans laquelle le module (105) de simulation est agencé pour tenir compte de temps de transport entre machines.

8. Installation suivant la revendication 6 ou 7, qui comprend supplémentairement un module (106) de validation, qui est agencé pour valider les données optimisées du planning de production à l'aide des données (SIM) de simulation.

9. Installation suivant l'une des revendications 6 ou 7, qui comprend supplémentairement un module (107) de pronostic, qui est agencé de manière à pronostiquer des données (PROD) pertinentes de production à l'aide des données (SIM) de simulation.

10. Procédé mis en œuvre par ordinateur pour l'optimisation d'un planning de production pour la production d'au moins un produit, dans lequel des collaborateurs sont affectés au service de machines de production du au moins un produit, comprenant les stades de procédé :
- lecture (S1) de données de planning pour la production d'informations de compétence en ce qui concerne le service des machines et d'informations de disponibilité des collaborateurs,
- détermination (S2) d'une affectation optimisée en pourcentage des collaborateurs aux machines respectives pendant un laps de temps donné à l'avance, en fonction des données de planning, des informations de compétence et des informations de disponibilités,
- détermination (S3) de données optimisées de planning de production, dans lequel on détermine une séquence temporelle optimisée de stades respectifs de production conformément aux données de planning sur les collaborateurs et les machines, en fonction de l'affectation en pourcentage et en fonction du nombre de collaborateurs nécessaires pour un stade de production, et s'il se produit un écart temporel de la production aux données optimisées du planning de production, on détermine à nouveau des données optimisées de planning de production en fonction de l'affectation optimisée en pourcentage,
et
- sortie (S4) de données optimisées de planning de production pour la production du au moins un produit suivant les données optimisées du planning de production.

11. Produit de programme d'ordinateur, qui peut être chargé directement dans un ordinateur programmable comprenant des parties de code de programme, qui sont propres à exécuter les stades du procédé suivant la revendication 10.
